# EUROPEAN PATENT SPECIFICATION

(11) **EP 4 309 988 B1**
(45) Date of publication and mention of the grant of the patent: **03.09.2025**
(21) Application number: 21937603.5
(22) Date of filing: 28.09.2021
(51) Int. Cl.: F16H 3/72, F16H 61/02, F16D 43/18, H02K 7/108, H02K 7/116, H02K 7/14, B62M 6/65, B62M 11/16, B60B 27/04, B60B 27/02

(54) **HUB MOTOR HAVING INTEGRATED TRANSMISSION MECHANISM**
NABENMOTOR MIT INTEGRIERTEM ÜBERTRAGUNGSMECHANISMUS
MOTEUR DE MOYEU AVEC MÉCANISME DE TRANSMISSION INTÉGRÉ

(30) Priority: 20.04.2021 CN 202110423587
(43) Date of publication of application: 24.01.2024
(73) Proprietor: Bafang Electric (Suzhou) Co., Ltd., Suzhou, Jiangsu 215122 (CN)
(72) Inventor: WANG, Qinghua, Suzhou Jiangsu 215122 (CN); WANG, Yingzhe, Suzhou Jiangsu 215122 (CN); ZOU, Bin, Suzhou Jiangsu 215122 (CN); HUANG, Shanjing, Suzhou Jiangsu 215122 (CN)
(74) Representative: Sun, Yiming
(86) International application number: PCT/CN2021/121299
(87) International publication number: WO 2022/222381

(56) References cited:
- CN-A- 102 248 885
- CN-A- 113 007 295
- CN-A- 113 022 775
- CN-U- 209 839 076
- CN-U- 210 003 792
- CN-U- 211 996 037
- CN-Y- 2 740 439

## Description

### TECHNICAL FIELD

The present invention relates to the field of hub motors, and more particularly, to a hub motor having an integrated transmission mechanism.

### BACKGROUND

A general internal transmission mechanism uses a centrifugal force to achieve automatic transmission, a centrifugal block is swung out to achieve automatic up shift when a certain pedal frequency is reached, and the centrifugal block is retracted to achieve automatic downshift when the pedal frequency is reduced to a transmission point or below, as described in CN 208 882 034 U.

CN 211 996 037 U discloses a hub motor and inner variable-speed hub integrated device, including a main shaft, where in the main shaft is respectively sleeved with an inner variable-speed hub and a hub motor, the inner variable-speed hub is provided with an end cover, and the hub motor includes a winding stator, a rotor, a sun gear, a motor clutch, an internal ring gear and a hub, and the inner variable-speed hub adopts a centrifugal inner variable-speed hub, which can automatically realize speed regulation according to a rotating speed of a flywheel. The centrifugal variable-speed hub uses a centrifugal force to achieve automatic transmission, and a centrifugal block is swung out to achieve automatic up shift when a certain pedal frequency is reached, and the centrifugal block is retracted to achieve automatic downshift when the pedal frequency is reduced to the transmission point or below.

However, for a vehicle employing the hub motor and inner variable-speed hub integrated device described above, when the vehicle is running at a high speed (greater than the transmission point), if a rider does not want to pedal, or does not need to pedal when going downhill, the inner variable-speed hub is automatically downshifted due to a decrease in rider's pedal frequency; when the vehicle remains at a high speed (greater than the transmission point) after sliding for a certain distance, it takes a short time for the pedal frequency to reach the transmission point after the rider pedals again to automatically up shift the inner variable-speed hub. In this case, the automatic downshift of the inner variable-speed hub will affect the riding experience, and an increase in gear shifting frequency tends to cause failure of the inner variable-speed hub, affecting its service life.

CN 102 248 885 A discloses a hub motor falling within the wording of the precharacterizing portion of claim 1.

### SUMMARY

In view of the shortcomings existing in the prior art, an objective of the present invention is to provide a hub motor having an integrated transmission mechanism, which realizes automatic shifting of gears according to an output speed, and can reduce the gear shifting frequency, prolong the service life and improve the riding experience.

The above mentioned objects are achieved by the invention as claimed in claim 1. The latter defines a hub motor for which protection is sought. The dependent claims concern particular embodiments of the invention as claimed in claim 1.

In summary, the present invention has the following beneficial effects:
1. utilizing the output speed to achieve automatic gear shifting can improve the riding experience, reduce the gear shifting frequency, and prolong the service life; and
2. considering the influence of raw materials and the processing technology, even the elastic reset members of the same specification will inevitably have a difference. If a plurality of elastic reset members are used, the reset of the limit plate may be affected, while only setting one elastic reset member can avoid the above problem, thus ensuring the smooth reset of the limit plate.

### BRIEF DESCRIPTION OF THE DRAWINGS

FIG. 1 is a schematic view showing an overall structure of a hub motor having an integrated transmission mechanism according to an embodiment;
FIG. 2 is an exploded schematic view of a hub motor having an integrated transmission mechanism according to an embodiment;
FIG. 3 is a sectional view of a transmission mechanism in an embodiment;
FIG. 4 is a structural schematic diagram of a centrifugal drive assembly according to an embodiment; and
FIG. 5 is a structural schematic diagram of a ratchet wheel and a ring gear according to an embodiment.

In the drawings: 1, main shaft; 21,hub; 22, end cover; 31, planet carrier; 311, gear plate; 32, planet wheel; 33, sun gear; 34, ring gear; 341, second protrusion; 4, first clutching assembly; 51, pawl seat; 52, pawl; 53, ratchet wheel; 531, first protrusion; 6, positioning plate; 61, avoidance settling tank; 71, centrifugal block; 72, shaft rod; 73, torsion spring; 74, pin; 75, swing arm; 751, driving rod; 76, limit plate; 761, release slot; 762, driving hole; 81, first bearing; 82, second bearing; 83, third bearing; 91, stator-rotor assembly; and 92, deceleration assembly; 10, ring plate.

### DETAILED DESCRIPTION

The present invention will be described in further detail below with reference to the accompanying drawings.

This specific embodiment is merely illustrative of the present invention and is not intended to limit the present invention.

### Embodiment:

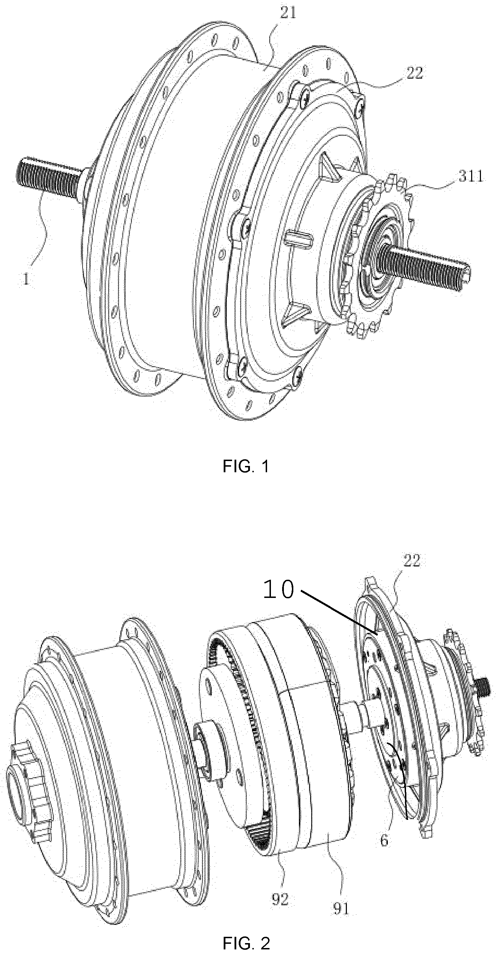

A hub motor having an integrated transmission mechanism, referring to FIGS. 1 to 5, includes a main shaft 1, wherein the main shaft 1 is provided with a hub 21 and an end cover 22 which are connected to each other, and the hub 21 and the end cover 22 are connected by screws for outputting a rotation speed; a machine core assembly connected to the hub 21 and a transmission mechanism connected to the end cover 22 are each disposed on the main shaft 1, and in this embodiment, a pedal rotation speed can be input through the transmission mechanism to drive the end cover 22 and the hub 21 to rotate, driving a vehicle to move forward, while the machine core assembly can input a motor rotation speed to drive the hub 21 and the end cover 22 to rotate, assisting the vehicle to move forward; the transmission mechanism includes a centrifugal drive assembly, and the centrifugal drive assembly is connected to the end cover 22, and switches states according to the rotation speed of the end cover 22; and according to the hub motor in this embodiment, the state of the centrifugal drive assembly, not the pedal frequency, is changed according to the output speed of the hub 21 and the end cover 22, thereby being able to reduce the gear shifting frequency of the transmission mechanism, prolong the service life, and improve the riding experience.

Referring to FIGS. 1 and 2, in this embodiment, the machine core assembly includes a stator-rotor assembly 91 and a deceleration assembly 92, and a rotation speed of a rotor of the stator-rotor assembly 91 is input to the hub 21 after passing through the deceleration assembly 92, forming a gear motor structure; and in this embodiment, the deceleration assembly 92 is a planetary deceleration assembly including a sun gear 33 connected to a rotor, a planet carrier 31 sleeving the main shaft 1, and an internal ring gear 34 is connected to the hub 21, and the planet carrier 31 is provided with a planet wheel 32 which is meshed with the sun gear 33 and the internal ring gear 34; wherein the planet carrier 31 belongs to the prior art and will not be described in detail herein.

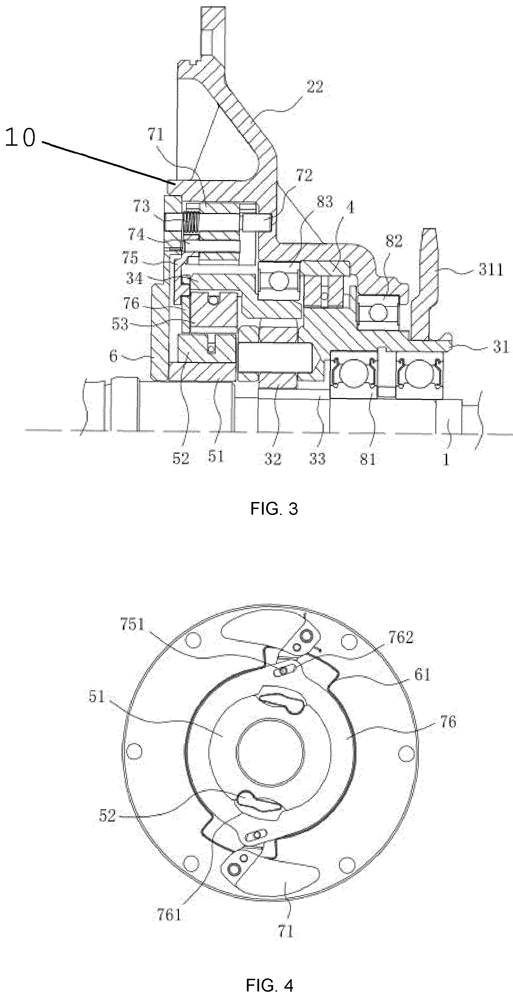

Referring to FIGS. 3 to 5, the centrifugal drive assembly includes centrifugal blocks 71, each centrifugal block 71 is provided with a shaft rod 72 connected to the end cover 22 in a penetrating manner, and the centrifugal blocks 71 can rotate about the shaft rods 72; the centrifugal blocks 71 can be switched from a retracted state to a swing-out state according to the rotation speed of the end cover 22; in this embodiment, an inner end wall of the end cover 22 is provided with a ring plate 10, an end of the ring plate 10 is fixedly provided with a positioning plate 6, and the positioning plate 6 is matched with the end cover 22 to form a housing of the transmission mechanism; one ends of the shaft rods 72 are connected with the positioning plate 6, and the other ends of the shaft rods 72 are connected with the end cover 22; and meanwhile, the ring plate 10 is located on outer sides of the centrifugal blocks 71, and can play a radial limiting role on the centrifugal blocks 71, i.e., the centrifugal blocks 71 cannot continue to rotate after being in contact with an inner side wall of the ring plate 10; and in this embodiment, one ends of the shaft rods 72 are directly connected to the end cover 22, while the inner end wall of the end cover 22 extends to form the ring plate 10, and in other alternative embodiments, a mounting base may be fixedly connected to the inner end wall of the end cover 22, the end of the shaft rods 72 are connected to the mounting base, and at the same time, the mounting base radially limits the centrifugal blocks 71.

Referring to FIG. 3, in this embodiment, the positioning plate 6 and the ring plate 10 are connected by screws, and at the same time, an end of the inner sidewall of the ring plate is provided with a clamping groove matched with the positioning plate 6, and the positioning plate 6 can be limited axially and radially by the clamping groove, thereby ensuring the assembly accuracy; in this embodiment, the number of the centrifugal blocks 71 is two, and the centrifugal drive assembly further includes an elastic reset member connected to only one centrifugal block 71 thereof; in this embodiment, the elastic reset member is a torsion spring 73, and the elastic force of the torsion spring 73 causes the centrifugal blocks 71 to have a tendency to reset to the retracted state; and specifically, the torsion spring 73 sleeves the shaft rod 72, one end of the torsion spring 73 is connected to the centrifugal blocks 71, and the other end of the torsion spring 73 is connected to the positioning plate 6.

Referring to FIGS. 3 to 5, the transmission mechanism further includes a planet carrier 31, a sun gear 33 fixedly disposed on the main shaft 1, and a ring gear 34, and the planet carrier 31 is provided with a planet wheel 32 which is meshed with the sun gear 33 and the ring gear 34; a first clutch assembly 4 is arranged between the planet carrier 31 and the end cover 22, and a second clutch assembly is arranged between the ring gear 34 and the positioning plate 6; the centrifugal drive assembly controls transmission between the ring gear 34 and the positioning plate 6 by limiting or releasing the second clutch assembly; specifically, in this embodiment a second bearing 82 is arranged between the planet carrier 31 and the end cover 22, a third bearing 83 is arranged between the ring gear 34 and the end cover 22, and two first bearings 81 are arranged between the main shaft 1 and the planet carrier 31; the planet carrier 31 is provided with a gear plate 311 circumferentially linked thereto, and a pedal rotation speed is input by driving the planet carrier 31 to rotate through the gear plate 311; in this embodiment, shifting of two gears can be realized by using a set of planetary gear assemblies, and in order to achieve shifting of more gears, a plurality of sets of planetary gear assemblies can be connected for transmission; and of course, in other alternative embodiments, the planetary gear assembly may be replaced with other structures, without limitation herein.

Referring to FIGS. 3 to 5, the second clutch assembly includes a pawl seat 51, a pawl 52, a ratchet wheel 53 and a spring ring, wherein the pawl seat 51 is fixedly connected with an inner end surface of the positioning plate 6, and the ratchet wheel 53 and the ring gear 34 can be circumferentially linked; the centrifugal drive assembly further includes a limit plate 76 connected to the centrifugal blocks 71, and the limit plate 76 is provided with a release slot 761 matched with the pawl 52; and the limit plate 76 can press the pawl 52 so that the pawl 52 cannot be meshed with the ratchet wheel 53, and after the centrifugal blocks 71 are rotated to be swung out, the limit plate 76 can be driven to rotate so that the pawl 52 is embedded in the release slot 761, and is meshed with the ratchet wheel 53;specifically, when the centrifugal blocks 71 are in a retracted state, an inner side wall of the limit plate 76 is in contact with the pawl 52, so that a meshing end of the pawl 52 cannot bounce up to be meshed with the ratchet wheel 53, and the second clutch assembly cannot be driven under the restriction of the centrifugal drive assembly; after the centrifugal blocks 71 is swung out, the limit plate 76 is driven to rotate so that the release slot 761 is opposite to the pawl 52, and then the meshing end of the pawl 52 bounces up and is embedded into the release slot 761, and is meshed with the ratchet wheel 53, so that the second clutch assembly can be driven after being released by the centrifugal drive assembly.

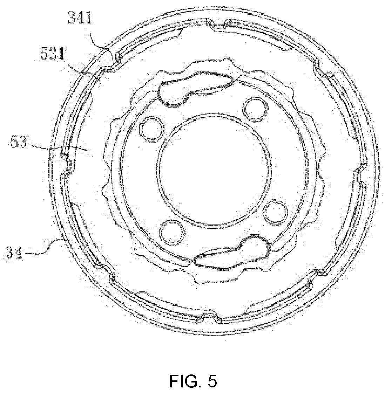

Referring to FIGS. 3 and 5, in this embodiment, the ring gear 34 includes two inner circumferential side walls having different inner diameters, one inner circumferential side wall of the ring gear 34 is provided with inner teeth matched with the planet wheel 32, and the other inner circumferential side wall of the ring gear 34is uniformly provided with a plurality of second protrusions 341; an outer circumferential side wall of the ratchet wheel 53 is uniformly provided with a plurality of first protrusions 531, and the first protrusions 531 are in contact with the second protrusions 341 to enable the ratchet wheel 53 to be circumferentially linked with the ring gear 34, and the linkage between the ratchet wheel 53 and the ring gear 34 through the first protrusions 531 and the second protrusions 341 can provide cushioning during gear shifting to improve the riding experience.

Referring to FIGS. 3 and 4, in this embodiment, the centrifugal blocks 71 are radially disposed at an outer side of the second clutch assembly, thereby being capable of reducing an axial dimension; each centrifugal block 71 is provided with a swing arm 75 for driving the limit plate 76 to rotate, specifically, each swing arm 75 is provided with a driving rod 751, the limit plate 76 is provided with driving holes 762 matched with the driving rods 751, and each driving hole 762 is a waist-shaped hole; the positioning plate 6 is provided with an avoidance settling tank 61 matched with the swing arms 75, so that the axial dimension can be reduced; the centrifugal blocks 71 are connected to the swing arms 75 by pins 74, and the positions of the pins 74 relative to the centrifugal blocks 71 and the swing arms 75 in the circumferential direction is fixed, so that the centrifugal blocks 71 can drive the swing arms 75 to deflect by the pins 74; and after the swing arms 75 are deflected, the driving rods 751 are in contact with the inner walls of the driving holes 762 to drive the limit plate 76 to rotate.

The working principle is as follows:
a rotation speed of a pedaling power is transmitted to the gear plate 311, the gear plate 311 drives the planet carrier 31 to rotate, the sun gear 33 is fixed, the planet carrier 31 drives the ring gear 34 to rotate through the planet wheel 32, and a rotation speed of the ring gear 34 is greater than a rotation speed of the planet carrier 31.

In a low gear: the centrifugal blocks 71 are in the retracted state, the pawl 52 in the second clutch assembly cannot be meshed with the ratchet wheel 53 under the restriction of the limit plate 76, and the rotation speed of the ring gear 34 cannot be transmitted to the end cover 22through the second clutch assembly; and at this time, the planet carrier 31 drives the end cover 22 to rotate through the first clutch assembly 4 to achieve power output.

In a high gear: after a rotation speed of the end cover 22 reaches a transmission point, the centrifugal blocks 71 are rotated to the swing-out state under the action of the centrifugal force, and the limit plate 76 is driven to rotate by the swing arms 75 so that the pawl 52 in the second clutch assembly is opposite to the release slot 761; a meshing end of the pawl 52 bounces up and is embedded into the release slot 761 and is meshed with the ratchet wheel 53, at this time, the second clutch assembly can be driven, and then the rotation speed of the ring gear 34 is transmitted to the end cover 22 through the second clutch assembly to achieve power output; and at this time, the rotation speed of the end cover 22 is greater than the rotation speed of the planet carrier 31, and the first clutch assembly 4 is in an overrunning state.

Electric power assistance: after the hub 21 and the end cover 22 are driven to rotate by the pedaling power, the machine core assembly starts to input a rotation speed to the hub 21,which helps a vehicle to move forward and achieves the purpose of saving labor.

The end cover 22 as a power output unit is used to control the centrifugal drive assembly, if the rotation speed of the end cover 22 is greater than the transmission point, while a rider does not want to pedal, or does not need to pedal when going downhill, the transmission mechanism remains in a high gear state. When the rider pedals again, there is no need to perform gear shifting by changing the pedal frequency, thereby improving the riding experience, and the gear of the transmission mechanism does not change during this process, thereby reducing the gear shifting frequency and prolonging the service life of the transmission mechanism.

## Claims

1. A hub motor having an integrated transmission mechanism (31, 32, 33, 34), comprising a main shaft (1), wherein the main shaft (1) is provided with a hub (21) and an end cover (22) which are connected to each other, a machine core assembly connected to the hub (21) and the integrated transmission mechanism (31, 32, 33, 34), which is connected to the end cover (22), are each disposed on the main shaft (1), wherein the integrated transmission mechanism (31, 32, 33, 34) comprises a centrifugal drive assembly, wherein the centrifugal drive assembly is connected to the end cover (22), and switches states according to a rotation speed of the end cover,
**characterized in that,**
the centrifugal drive assembly comprises centrifugal blocks (71), and each centrifugal block (71) is provided with a shaft rod (72) connected to the end cover (22) in a penetrating manner; and the centrifugal blocks (71) can be switched from a retracted state to a swing-out state according to the rotation speed of the end cover (22).

2. The hub motor having the integrated transmission mechanism (31, 32, 33, 34) according to claim 1, **characterized in that** the number of the centrifugal blocks (71) is at least two, and the centrifugal drive assembly further comprises an elastic reset member connected to only one of the centrifugal blocks (71) thereof.

3. The hub motor having the integrated transmission mechanism (31, 32, 33, 34) according to claim 1, **characterized in that** an inner end wall of the end cover (22) is provided with a ring plate (10), an end of the ring plate (10) is fixedly provided with a positioning plate (6), and the positioning plate (6) is matched with the end cover (22) to form a housing of the integrated transmission mechanism (31, 32, 33, 34).

4. The hub motor having the integrated transmission mechanism according to claim 3, **characterized in that** one end of each of the shaft rods (72) is connected with the positioning plate (6), and the other end of each of the shaft rods (72) is connected with the end cover (22); and the ring plate (10) is located on outer sides of the centrifugal blocks (71), and is configured to play a radial limiting role on the centrifugal blocks (71).

5. The hub motor having the integrated transmission mechanism (31, 32, 33, 34) according to claim 3, **characterized in that** an inner side wall of the ring plate (10) is provided with an inserting groove matched with the positioning plate (6).

6. The hub motor having the integrated transmission mechanism (31, 32, 33, 34) according to claim 3, **characterized in that** the integrated transmission mechanism (31, 32, 33, 34) further comprises a planet carrier (31), a sun gear (33) fixedly disposed on the main shaft (1), and a ring gear (34), and the planet carrier (31) is provided with a planet wheel (32) which is meshed with the sun gear (33) and the ring gear (34); a first clutch assembly (4) is arranged between the planet carrier (31) and the end cover (22), and a second clutch assembly is arranged between the ring gear (34) and the positioning plate (6); and the centrifugal drive assembly controls transmission between the ring gear (34) and the positioning plate (6) by limiting or releasing the second clutch assembly.

7. The hub motor having the integrated transmission mechanism (31, 32, 33, 34) according to claim 6, **characterized in that** the second clutch assembly comprises a pawl seat (51), a pawl (52), a ratchet wheel (53) and a spring ring, wherein the pawl seat (51) is fixedly connected with the positioning plate (6), and the ratchet wheel (53) and the ring gear (34) can be circumferentially linked; the centrifugal drive assembly further comprises a limit plate (76) connected to the centrifugal blocks (71), and the limit plate (76) is provided with a release slot (761) matched with the pawl (52); and the limit plate (76) is configured to press the pawl (52) so that the pawl (52) cannot be meshed with the ratchet wheel (53), and the limit plate (6) is configured to be rotated by the centrifugal blocks (71) when the latter rotate to be swung out, so that the pawl (52) is embedded in the release slot (761), and is meshed with the ratchet wheel (53).

8. The hub motor having the integrated transmission mechanism (31, 32, 33, 34) according to claim 7, **characterized in that** each centrifugal block (71) is provided with a swing arm (75) for driving rotation of the limit plate (76).

9. The hub motor having the integrated transmission mechanism (31, 32, 33, 34) according to claim 6, **characterized in that** the centrifugal blocks (71) are radially located at an outer side of the second clutch assembly.

## Patentansprüche

1. Ein Radnabenmotor mit einem integrierten Getriebemechanismus (31, 32, 33, 34), umfassend eine Hauptwelle (1), wobei die Hauptwelle (1) mit einer Nabe (21) und einem Enddeckel (22) versehen ist, die miteinander verbunden sind, ein mit der Nabe (21) verbundenes Maschinenkern-Baugruppenelement und der mit dem Enddeckel (22) verbundene integrierte Getriebemechanismus (31, 32, 33, 34) jeweils auf der Hauptwelle (1) angeordnet sind, wobei der integrierte Getriebemechanismus (31, 32, 33, 34) eine Fliehkraftantriebseinheit umfasst, wobei die Fliehkraftantriebseinheit mit dem Enddeckel (22) verbunden ist und ihren Zustand in Abhängigkeit von der Drehzahl des Enddeckels schaltet,
**dadurch gekennzeichnet, dass**
die Fliehkraftantriebseinheit Fliehgewichte (71) umfasst, wobei jedes Fliehgewicht (71) mit einer Schaftstange (72) versehen ist, die durchgehend mit dem Enddeckel (22) verbunden ist; und die Fliehgewichte (71) in Abhängigkeit von der Drehzahl des Enddeckels (22) von einem eingefahrenen Zustand in einen ausgeschwenkten Zustand schaltbar sind.

2. Der Radnabenmotor mit dem integrierten Getriebemechanismus (31, 32, 33, 34) nach Anspruch 1, **dadurch gekennzeichnet, dass** die Anzahl der Fliehgewichte (71) mindestens zwei beträgt, und die Fliehkraftantriebseinheit ferner ein elastisches Rückstellelement umfasst, das nur mit einem der Fliehgewichte (71) verbunden ist.

3. Der Radnabenmotor mit dem integrierten Getriebemechanismus (31, 32, 33, 34) nach Anspruch 1, **dadurch gekennzeichnet, dass** eine innere Stirnwand des Enddeckels (22) mit einer Ringplatte (10) versehen ist, ein Ende der Ringplatte (10) fest mit einer Positionierplatte (6) versehen ist, und die Positionierplatte (6) zusammen mit dem Enddeckel (22) ein Gehäuse des integrierten Getriebemechanismus (31, 32, 33, 34) bildet.

4. Der Radnabenmotor mit dem integrierten Getriebemechanismus nach Anspruch 3, **dadurch gekennzeichnet, dass** ein Ende jeder der Schaftstangen (72) mit der Positionierplatte (6) verbunden ist und das andere Ende jeder der Schaftstangen (72) mit dem Enddeckel (22) verbunden ist; und die Ringplatte (10) sich an der Außenseite der Fliehgewichte (71) befindet und dazu ausgelegt ist, eine radiale Begrenzung der Fliehgewichte (71) bereitzustellen.

5. Der Radnabenmotor mit dem integrierten Getriebemechanismus (31, 32, 33, 34) nach Anspruch 3, **dadurch gekennzeichnet, dass** eine Innenseitenwand der Ringplatte (10) mit einer Einfügenut versehen ist, die mit der Positionierplatte (6) zusammenpasst.

6. Der Radnabenmotor mit dem integrierten Getriebemechanismus (31, 32, 33, 34) nach Anspruch 3, **dadurch gekennzeichnet, dass** der integrierte Getriebemechanismus (31, 32, 33, 34) ferner einen Planetenträger (31), ein auf der Hauptwelle (1) fest angeordnetes Sonnenrad (33) und ein Hohlrad (34) umfasst, und der Planetenträger (31) mit einem Planetenrad (32) versehen ist, das mit dem Sonnenrad (33) und dem Hohlrad (34) im Eingriff ist; eine erste Kupplungseinheit (4) ist zwischen dem Planetenträger (31) und dem Enddeckel (22) angeordnet, und eine zweite Kupplungseinheit ist zwischen dem Hohlrad (34) und der Positionierplatte (6) angeordnet; und die Fliehkraftantriebseinheit die Kraftübertragung zwischen dem Hohlrad (34) und der Positionierplatte (6) durch Begrenzung oder Freigabe der zweiten Kupplungseinheit steuert.

7. Der Radnabenmotor mit dem integrierten Getriebemechanismus (31, 32, 33, 34) nach Anspruch 6, **dadurch gekennzeichnet, dass** die zweite Kupplungseinheit einen Sperrklinkensitz (51), eine Sperrklinke (52), ein Sperrrad (53) und einen Federring umfasst, wobei der Sperrklinkensitz (51) fest mit der Positionierplatte (6) verbunden ist, und das Sperrrad (53) und das Hohlrad (34) miteinander drehbar verbunden sind; die Fliehkraftantriebseinheit ferner eine mit den Fliehgewichten (71) verbundene Begrenzungsplatte (76) umfasst, und die Begrenzungsplatte (76) mit einem Freigabeschlitz (761) versehen ist, der zur Sperrklinke (52) passt; und die Begrenzungsplatte (76) dazu ausgelegt ist, die Sperrklinke (52) zu drücken, sodass diese nicht mit dem Sperrrad (53) in Eingriff kommen kann, und die Begrenzungsplatte (76) dazu eingerichtet ist, durch die Fliehgewichte (71) in Drehung versetzt zu werden, wenn diese in den ausgeschwenkten Zustand übergehen, so dass die Sperrklinke (52) in den Freigabeschlitz (761) einspringt und mit dem Sperrrad (53) in Eingriff gebracht wird.

8. Der Radnabenmotor mit dem integrierten Getriebemechanismus (31, 32, 33, 34) nach Anspruch 7, **dadurch gekennzeichnet, dass** jedes Fliehgewicht (71) mit einem Schwenkarm (75) versehen ist, um eine Drehung der Begrenzungsplatte (76) anzutreiben.

9. Der Radnabenmotor mit dem integrierten Getriebemechanismus (31, 32, 33, 34) nach Anspruch 6, **dadurch gekennzeichnet, dass** die Fliehgewichte (71) radial an der Außenseite der zweiten Kupplungseinheit angeordnet sind.

## Revendications

1. Moteur de moyeu comportant un mécanisme de transmission intégré (31, 32, 33, 34), comprenant un arbre principal (1), l'arbre principal (1) étant pourvu d'un moyeu (21) et d'un couvercle d'extrémité (22) connectés l'un à l'autre, un ensemble noyau de machine connecté au moyeu (21) et le mécanisme de transmission intégré (31, 32, 33, 34) connecté au couvercle d'extrémité (22) étant chacun disposés sur l'arbre principal (1), le mécanisme de transmission intégré (31, 32, 33, 34) comprenant un ensemble d'entraînement centrifuge, l'ensemble d'entraînement centrifuge étant connecté au couvercle d'extrémité (22) et passant d'un état à un autre selon la vitesse de rotation du couvercle d'extrémité,
**caractérisé en ce que**
l'ensemble d'entraînement centrifuge comprend des masselottes centrifuges (71), chaque masselotte centrifuge (71) étant pourvue d'une tige d'arbre (72) connectée au couvercle d'extrémité (22) de manière traversante ; et les masselottes centrifuges (71) étant aptes à passer d'un état rétracté à un état déployé en fonction de la vitesse de rotation du couvercle d'extrémité (22).

2. Moteur de moyeu comportant un mécanisme de transmission intégré (31, 32, 33, 34) selon la revendication 1, **caractérisé en ce que** le nombre de masselottes centrifuges (71) est au moins égal à deux, et l'ensemble d'entraînement centrifuge comprend en outre un élément de rappel élastique connecté à une seule des masselottes centrifuges (71).

3. Moteur de moyeu comportant un mécanisme de transmission intégré (31, 32, 33, 34) selon la revendication 1, **caractérisé en ce que** une paroi d'extrémité interne du couvercle d'extrémité (22) est pourvue d'une plaque annulaire (10), une extrémité de la plaque annulaire (10) étant pourvue d'une plaque de positionnement (6), la plaque de positionnement (6) coopérant avec le couvercle d'extrémité (22) pour former un boîtier du mécanisme de transmission intégré (31, 32, 33, 34).

4. Moteur de moyeu comportant un mécanisme de transmission intégré (31, 32, 33, 34) selon la revendication 3, **caractérisé en ce que** une extrémité de chaque tige d'arbre (72) est connectée à la plaque de positionnement (6), et l'autre extrémité de chaque tige d'arbre (72) est connectée au couvercle d'extrémité (22) ; et la plaque annulaire (10) est située à l'extérieur des masselottes centrifuges (71) et est configurée pour assurer une limitation radiale des masselottes centrifuges (71).

5. Moteur de moyeu comportant un mécanisme de transmission intégré (31, 32, 33, 34) selon la revendication 3, **caractérisé en ce que** une paroi latérale intérieure de la plaque annulaire (10) est pourvue d'une rainure d'insertion adaptée à la plaque de positionnement (6).

6. Moteur de moyeu comportant un mécanisme de transmission intégré (31, 32, 33, 34) selon la revendication 3, **caractérisé en ce que** le mécanisme de transmission intégré (31, 32, 33, 34) comprend en outre un porte-satellite (31), un pignon solaire (33) fixé sur l'arbre principal (1), et une couronne dentée (34), le porte-satellite (31) étant pourvu d'un satellite (32) engrenant avec le pignon solaire (33) et la couronne dentée (34) ; un premier ensemble d'embrayage (4) étant disposé entre le porte-satellite (31) et le couvercle d'extrémité (22), et un second ensemble d'embrayage étant disposé entre la couronne dentée (34) et la plaque de positionnement (6) ; et l'ensemble d'entraînement centrifuge contrôlant la transmission entre la couronne dentée (34) et la plaque de positionnement (6) en bloquant ou en libérant le second ensemble d'embrayage.

7. Moteur de moyeu comportant un mécanisme de transmission intégré (31, 32, 33, 34) selon la revendication 6, **caractérisé en ce que** le second ensemble d'embrayage comprend un siège de cliquet (51), un cliquet (52), une roue à rochet (53) et un anneau ressort, le siège de cliquet (51) étant fixé à la plaque de positionnement (6), et la roue à rochet (53) pouvant être entraînée en rotation avec la couronne dentée (34) ; l'ensemble d'entraînement centrifuge comprenant en outre une plaque de butée (76) connectée aux masselottes centrifuges (71), la plaque de butée (76) étant pourvue d'une fente de dégagement (761) adaptée au cliquet (52) ; et la plaque de butée (76) étant configurée pour appuyer sur le cliquet (52) de sorte que celui-ci ne puisse pas s'engrener avec la roue à rochet (53), et la plaque de butée (76) est configurée pour être entraînée en rotation par les masselottes centrifuges (71) lorsqu'elles passent à l'état déployé, de sorte que le cliquet (52) s'engage dans la fente de dégagement (761) et s'engrène avec la roue à rochet (53).

8. Moteur de moyeu comportant un mécanisme de transmission intégré (31, 32, 33, 34) selon la revendication 7, **caractérisé en ce que** chaque masselotte centrifuge (71) est pourvue d'un bras pivotant (75) destiné à entraîner la rotation de la plaque de butée (76).

9. Moteur de moyeu comportant un mécanisme de transmission intégré (31, 32, 33, 34) selon la revendication 6, **caractérisé en ce que** les masselottes centrifuges (71) sont radialement situées à l'extérieur du second ensemble d'embrayage.
